# DEMANDE DE BREVET EUROPEEN

(11) **EP 2 227 931 A1**
(43) Date de publication de la demande: **15.09.2010**
(21) Numéro de dépôt: 10366003.1
(22) Date de dépôt: 01.03.2010
(51) Int. Cl.: A01C 1/00, A01C 1/06, C05F 11/08

(54) **Semences fourragères azotobactérisees pour la biofertilisation des grandes cultures**

(30) Priorité: 09.03.2009 FR 0901063
(71) Demandeur: Claude, Pierre-Philippe, 54000 Nancy (FR)
(72) Inventeur: Claude, Pierre-Philippe, 54000 Nancy (FR)

(57) **Abrégé**

L'invention consiste en un inoculum *bactérien* constitué de semences fourragères pour utilisation en présence de BRR (biomasses racinaires résiduelles) lors de l'implantation des dites cultures fourragères. Lesdites semences pèsent chacune en moyenne de 0,5 à 6 mg, plus particulièrement de 1,5 à 5 mg, et préférablement d'environs 2 mg ; elles sont apportées à des doses-hectare comprises entre 8 et 48 kg, plus particulièrement entre 15 et 40 kg, et avantageusement d'environs 30 kg. Les cultures fourragères sont choisies parmi un groupe constitué d'espèces *Poaceae* (*alias Gramniae*), *Fabaceae (alias Leguminoseae)* ou *Brassicaceae.* Cette inoculum est constitué de cellules de la famille *Azotobacteraceae* ; les doses-hectare de celles-ci étant comprise entre 1 x 10¹¹ et 1 x 10¹⁴ cellules, plus particulièrement entre 1 x 10¹² et 1 x 10¹³ cellules, et avantageusement d'environ 5 x 10¹² cellules. De plus, les *cellules Azotobacteraceae* sont particulièrement rhizoincompétentes en ce sens qu'elles ne produisent pas d'effets positifs sur les plantules lorsqu'appliquées sur semences fourragères en absence de biomasses racinaires résiduelles (BRR) souterraines, et/ou que l'effet de ces cellules *Azotobacteraceae* sur les plantules obtenues en absence de biomasses racinaires résiduelles (BRR) souterraines n'est pas corrélé à celui observé en présence de BRR.

## Description

### DOMAINE TECHNIQUE DE L'INVENTION

Le domaine technique de l'invention concerne la biofertilisation bactérienne, notamment azotobactérienne des prairies. Il est question de production et d'utilisation inocula bactériens et de valorisation des biomasses racinaires résiduelles au moment de l'ensemencement et/ou la rénovation - voire l'amélioration, de prairies existantes.

### ÉTAT DE LA TECHNIQUE

### LA BIOFERTILISATION À L'AIDE DE BFCP AZOTOBACTÉRIENNES

Les BFCP (bactérie favorisant la croissance des plantes) jouent rôle important dans la croissance des plantes. Elles colonisent, outre les racines de certaines cultures, les résidus de cultures (pailleux), les engrais organo-minéraux (EOM) et/ou les biomasses racinaires résiduelles (BRR). Les mécanismes responsables de l'amélioration de la croissance comprennent : (i) la production de sidérophores extracellulaires (agents microbiens de transport du fer) qui peuvent s'associer de manière efficace avec le fer présent dans l'environnement en le rendant moins disponible pour certaines microflores naturelles non-phytogènes, (ii) l'antibiose contre des bactéries et des champignons pathogènes, (iii) la production de substances favorisant la croissance, et iv) la solubilisation des phosphates organiques et inorganiques. Les BFCP appartiennent à plusieurs genres, y compris *Agrobacterium, Alcaligenes, Arthrobacter, Azotobacter, Bacillus, Cellulomonas, Erwinia, Flavobacterium, Pseudomonas, (Brady)rhizobium* et *Xanthomonas.*

Le genre *Azotobacter* est composé d'au moins 6 espèces: *Azotobacter* armeniacus, *Azotobacter* beijerinckii, *Azotobacter* chroococcum, Azotobacter nigricans, *Azotobacter* paspali et *Azotobacter* vinelandi. La biofertilisation azotobactérienne consiste en l'utilisation d'inocula BFCP diazotrophes, avantageusement du genre *Azotobacter* de la famille des *Azotobaceracea.* Les bactéries membres de la famillie *Azotobacteracea* sont de bactéries libres, aérobies et capables de fixer l'azote de manière non symbiotique. Leurs populations peuvent varier dans le sol mais ne dépassent que très rarement 10² à 10³ par gramme de sol.

### RESSEMER ET/OU SURSEMER LES PRAIRIES EXISTANTES AFIN DE LES RÉNOVER

Une prairie existante (« ancienne ») - ou encore un pâturage pérenne, supposent une importante accumulation de ***biomasses racinaires résiduelles*** (BRR) souterraines. Si on décidait de rénover ou améliorer cette prairie, voire même de la convertir au profit d'une grande culture - automnale ou printanière, il faudrait nécessairement faire avec cette masse de BRR pouvant atteindre dans bien des cas plus de 30 tonnes de matière sèche par hectare.

Pour effectuer cette *rénovation* il est possible soit de ressemer (***re***-semer ; avec destruction de la flore existante), soit de sursemer (***sur***-semer ; sans destruction de la flore existante). On peut réaliser un *ressemis* avec un matériel traditionnel après *décapage* de la prairie de façon à détruire aussi le *feutrage.* Le *sursemis* lui consiste à ressemer de bonnes espèces prairiales dans des prairies existantes (anciennes) clairsemées mais dont on désire préserver la flore naturelle ; on parle ici parfois *d'amélioration* des prairies. Ces deux pratiques - re/sur-semis, sont donc avantageusement effectuées à l'aide de techniques culturales simplifiées (TCS ; Soltner 2009).

### ALIMENTATION EN SUBSTRATS CARBONÉS DES BFCP : LE RÔLE DES BRR ET DES CHAUMES

Pour croître et survivre in situ (en sols arables) les bactéries favorisant la croissance des plantes (BFCP) azotobactériennes (*AZB (Azotobacteraceae)*) ont besoins de substrats carbonés. Traditionnellement, ces substrats proviennent d'exsudats racinaires, d'où le développement d'un secteur industriel destiné à la fabrication d'inocula BFCP dits « rhizobactériens », voire symbiotiques dans le cas des BFCP de la famille des *Rhizobiacea.* Or, cette alimentation des BFCP stimule elle-même cette exsudation et contribue donc à ponctionner d'autant plus le flux photosynthétique ; cette bactérisation des rhizosphères s'avère donc, à terme, contreproductive et peut en annuler les bienfaits (eg. diazotrophie, production de phytohormones, etc.).

Or, en principe il existe *in situ* une autre source de substrat carboné pour les BFCP ; les matières organiques d'origine racinaire en surface des sols, notamment sous praires au moment de leurs rénovations et/ou améliorations. En effet, de 50 à 90%, de la productivité primaire (NPP, *net primary productivity)* d'une prairie est à terme souterraine. Les prairies et gazons produisent donc d'importantes quantités de biomasses racinaires. L'accumulation de ces biomasses racinaires en milieux tempérés peuvent varier de 10 000 à 30 000 kg par hectare, auxquelles peuvent s'ajouter les tiges et chaumes (voire Kucharik et al 2006 et Wang et al 2007). En effet, bien que les taux de production des biomasses résiduelles aériennes et souterraines de Poaceae fourragères pérennes sont comparables entre elles, soit en milieux tempérées de l'ordre de 5 à 8 tonnées de matière sèche par hectare et par année, leurs taux de dégradation *in situ* (i.e. une fois enfouies) sont très différents, celui des biomasses racinaires résiduelles (BRR) étant généralement de 2 à 3 trois inférieur à celui des résidus de culture aériens (eg. Schneider et al. 2006). En effet, les résidusphères racinaires sont généralement plus récalcitrantes et résistantes à la dégradation microbienne que les résidus de culture pailleux - essentiellement du fait d'une lignification plus importante de leurs tissus (Rasse et al. 2005). C'est donc pourquoi lesdites BRR vont s'accumuler avec le temps et représentées à termes parfois plus de 30 tonnes de matière sèches par hectare. A noter que ces chiffres sont supérieurs aux quelques 8 à 15 000 kg par hectare de résidus pailleux provenant de cultures céréalières ou de maïs-grain. Il n'est donc pas surprenant que dans l'ensemble cette biomasse puisse contribuer à l'activité diazotrophe in situ et l'alimentation en N de la prairie ; selon Boddey et Victoria 1986, plus de 1/3 du bilan azoté de certaines praires est ainsi attribuable à ce type de diazotrophie, soit l'équivalent de près de 50 kg de N par hectare et par année.

La bactérisation des biomasses résiduelles pailleuses n'est pas en soi nouvelle et à fait l'objet, entre autres, de mes précédentes inventions (FR 01/15542, FR 06/10583, FR 05/05753, FR 06/00014) et publications (Claude et Fillion 2004 et Claude de Giroux 2006). Cela dit, l'applicabilité de ces approches technologiques aux susdites biomasses résiduelles racinaires (BRR), notamment au moment de la rénovation et/ou l'amélioration des prairies, est limitée. D'une part, les BRR ne sont pas facilement accessibles aux BFCP azotobactériennes par voie d'inoculation aérienne (pulvérisation) comme c'est le cas avec des résidus de culture au sol (Claude et Fillion 2004). D'autre, l'application d'une fumure de fond organo-minéral (Claude et Giroux 2006), à hauteur de quelques centaines de kg par hectare s'il le faut, n'est pas généralement recommandée ou recommandable lors de la rénovation des prairies. Il n'existe pas, à ma connaissance, de protocole pour la valorisation microbiologique par inoculation des BRR.

### RÉSIDU-COMPÉTENCE OU RHIZO-INCOMPÉTENCE ?

Les compositions des exsudats racinaires et des métabolites issus de la dégradation des résidus de cultures sont contrastés. Plutôt riches en acides aminés, les exsudats racinaires ont un rapport C/N beaucoup plus faible que celui desdits métabolites issues de la dégradation des résidus de culture plutôt riches en métabolites mono-, di- et polysaccharides. Il s'en suit que les populations de BFCP, notamment de BFCP diazotrophes des rhizosphères et des résidusphères seront probablement très différentes. Cette différentiation des BFCP plutôt rhizocompétentes des BFCP plutôt résiducompétentes a été maintes fois observée (eg. Seldin et al. 1998).

Les contrastes rhizo-compétence / résidu-compétence des souches azotobactérienne plus ou moins rustiques et autochtones peuvent aussi être attribués aux régimes trophiques de ces organismes. En effet, les BFCP les plus copiotrophes seront aussi, au sens de Bashan 1991, les plus capables de réduire l'Em (potentiel membranaire) des racines favorisant ainsi leurs adhésion ; les BFCP plutôt oligotrophes seront du coup moins « rhizophiles » et préféreront se nicher dans les résidusphères et/ou les CAH.

Or, bien que la rhizocompétence des BFCP aie fait l'objet de maintes études et revue, la résiducompétence elle est mal comprise et peu étudiée, du moins *in situ.* Le peu que nous connaissons des mécanismes d'adhésion de bactéries aux résidus pailleux, pailles, foins et fourrages, nous provient de l'étude des processus de dégradation dans le rumen des herbivores (Matulova et al. 2005, Nielsen et al. 2005). Or bien que révélatrices, ces études ne sont pas applicables in situ. Quelques études récentes, (Gaillard et al. 1999 et 2003) décrivent la diffusion de substrats carboné en sols arables en proximité de résidus de culture in situ en cour de dégradation, sans pour autant expliquer les mécanismes d'adhésion des bactéries à ceux-ci.

### SEMENCES FOURRAGÈRES : DES PROPAGULES MAL VALORISÉE EN AGRICULTURE

De façon général, les semences *Poaceae* fourragères et gazonnières sont petites, soit de l'ordre de 1 à 6 mg selon l'espèce ; les doses-hectare nécessaires à l'implantation ou à la rénovation d'une prairie ou d'un gazon - voire occasionnellement le semis de Cipan (cultures intermédiaires pièges à nitrate), comporte donc un grand nombre de propagules, soit de l'ordre de 12 à 25 millions par hectare ; pour comparaison, une dose-hectare de semences de maïs comporte au plus 100 000 propagules, de soja environ 400 000, et de céréales environ 2 millions.

Or, de 67% à 75% de ces semences *Poaceae* fourragères germeront in situ, et - *grosso modo,* la moitié de celles-ci émergeront. Parmi les semences émergées, la moitie - cette proportion peut varier appréciablement, donneront lieu à une plantule définitivement établie (voir Ehrenreich 1954, Kitchen et Monsen 1994, Winkel et al. 1991 et Ries et Hofmann 1991). Lors de implantation d'une prairie environs 3 à 5 millions de plantules seront donc établies, et plus de 75%, voire 90% des semences *Poaceae* ne seront pas véritablement « élues » en ce sens ; elles produiront néanmoins jusqu'à une certaine profondeur des rhizosphères « naissantes ».

### QUELQUES DEMANDES DE BREVETS PERTINENTES ?

Une recherche préliminaire de la base de connaissance révéla quelques demandes de brevets jugées a priori comme pertinentes. Plus précisément, il a été fait mention de plusieurs documents, y compris les documents EP 0 097 459 A**,** US 5 113 619 A et FR 2 910 230 A**.** Or, EP 0 097 459 A décrit un procédé pour l'inoculation microbienne semences, l'inoculum en question étant ici lyophilisé *(freeze dried* ; séché à froid) et formulé avantageusement à l'aide de glycérol et/ou d'autre types de « *cyroprotectants ».* L'Inoculum en question n'est pas constitué et/ou co-formulé à l'aide d'une quelconque dose (-hectare) de semences (de cultures fourragères) ; lesdites semences étant - contrairement à la présente invention (FR0901063), bel et bien la cible de l'inoculum. *Idem* pour ce qui concerne US 5 113 619 A ; l'inoculum bactérien et sa composition ciblent les semences - en particulier les semences *Fabaceae* (*alias Leguminoseae*) ; l'inoculum bactérien ne cible pas lesdites BRR, et il n'est certainement pas constitué de semences en guise de co-formulations comme le propose ingénieusement la présente invention (FR0901063). Il s'agit bien ici de là de promouvoir un effet phytogène directement perceptible par la plantule au sens habituel, et non d'une éventuelle valorisation microbiologique desdites BRR.

Pour ce qui concerne FR 2 910 230 A - document de mon cru, ladite méthode d'utilisation de biomasses bactériennes n'est pas constituée d'une dose-hectare de semences fourragères. A vrai dire, elle ne cible pas non pus - contrairement à EP 0 097 459 A**,** US 5113 619 A et US 3 499 748 A (voir infra), de telles semences, mais plutôt les résidus de culture pailleux au sol, et cela contrairement au sens de la présente invention.

Enfin, il y a US 3 499 748 A**.** Encore une fois, il s'agit ici d'inocula bactériens constitués de « plâtre de Paris » (*plaster of Paris),* matière poreuse et vraisemblablement capable d'abriter des cellules bactériennes. Cette co-formulation, bien qu'ingénieuse à l'époque, est statique en comparaison à l'effet d'entraînement rhizosphérique vers les BRR que procurera la mise oeuvre de l'invention.

### Définitions

**Rénovation des prairies** : pratiques culturale consistant en un semis pour remplacer totalement et rapidement une végétation où les espèces moyennes ou médiocres prédominent. Il sera nécessaire d'interrompre momentanément la production en détruisant la prairie pour repartir sur un sol propre.
**Amélioration des prairies** : pratiques culturales destinées à remettre à niveau la production de la parcelle par des techniques simples et une exploitation adaptée. La modification de la flore se fera progressivement sur plusieurs années.
**Germination** : la décomposition de la structure interne et externe de la semence donnant lieu à l'apparition des radicelles et des coléoptiles. In vitro le taux de germination peut atteindre plus de 98-99%.
**Émergence** : l'apparition à la surface du sol des coléoptiles et/ou premières feuilles d'une plantule. In situ, a peine 40 à 50% des semence germées sont associé à l'émergence d'un plantule.
**Établissement** : l'installation définitive, in situ d'une plantule émergé ; 40 à 50% des plantules émergé s'établissent.
**Semences candidates** : l'ensemble (100%) des semences apportées par hectare. Dans le cas de graminées fourragères, une dose hectare de semences comporte de 12 à 25 millions de semences candidates.
**Semences élues** : les semences candidates ayant donné lieu à l'établissement d'une plantule (voir définition) ; in situ, de 5 à 3% des semences candidates sont élues.
**Surdensité rhizosphérique (SDR)** : présence en proximité de la rhizosphère d'une plantule définitivement établie de plusieurs - en principe de 2 à 4, ***rhizosphères naissantes*** issues de **semences *candidates*** mais **non-élues.**
**Biomasse racinaires résiduelles (BRR)** : l'ensemble des racines laissée dans la partie supérieur de la zone racinaire d'une prairie et qui ce sont accumulée de la sorte au cour de temps. Les BRR sont donc comme de raison importantes, soit entre 10 et 30 000 kg par hectare, pour les prairies anciennes, ou du moins existantes, ayant plus de 5 ans d'implantation.
**Résid*u*sphère** : Volume ou zone du sol entourant immédiatement les résidus de culture pailleux, engrais organominéraux et/ou biomasses racinaires résiduelles, et plus ou moins influencé par ceux-ci. Il est aussi question d'un « noyau » où se situe la décomposition desdits résidus de culture. A noter que les microorganismes responsables de la décomposition occupent généralement moins de 1% de l'ensemble du sol et sont particulièrement présents et actifs dans la résidusphère.
**Résiducompétence** : Au même titre que la rhizocompétence, il s'agit ici de l'ensemble des mécanismes biologiques et moléculaires impliqués dans l'adhésion, la survie, l'activité et la prolifération de microorganismes - *Azotobacteraceae* notamment, au sein des résidusphères. La résidusphère ayant été à ce jour - en comparaison avec la maintenant fameuse rhizosphère, peu étudiée et lesdits mécanismes biomoléculaires peu ou pas élucidés.
**Rhizo*in*compétence** : Du fait d'une différentiation, tant métabolique que génétique, il s'agit ici de l'incapacité qu'ont certaines populations microbiennes situées transitoirement dans les rhizosphères à affecter positivement la croissance et la développement de la plantule issue d'une grains préalablement traitées par inoculation avec des propagules desdites populations microbiennes, y compris comme de raison *Azotobacteraceae.*
**Rhizosphère** naissante : Rhizosphère issue de la germination d'une *semence candidate* main non-élue qui ne pourra atteindre l'étendue d'une rhizosphère issue d'une plantule définitivement établie ; selon la densité de semis - et donc accessoirement la taille (PMG) et le nombre de propagules (semences) par hectare, ces deux types de rhizosphères seront plus ou moins rapprochées.

### DIVULGATION DE L'INVENTION

### Problème technique

La bactérisation des biomasses racinaires résiduelles (BRR), notamment sur prairies anciennes, est problématique du fait qu'elles sont peu ou pas directement accessibles par voie de pulvérisation liquide d'inocula azotobactériens. Cette inaccessibilité est préjudiciable au secteur de la biofertilisation et prive les *Azotobacteraceae* ainsi réintroduites d'une abondante source de substrats carbonés facilement assimilables. En effet, et malgré leur relative abondance par rapport aux résidus de culture au sol les BRR sont plus difficilement accessible à l'inoculation (azoto)bactérienne, ou plus généralement microbienne, du fait de leurs situation souterraine.

D'autre part, la bactérisation des semences Poaceae fourragères et/ou gazonnières est peu efficace du fait que la majorité des semences individuellement ne donnent pas lieu à l'établissement d'une plantule définitive. Pire, si établissement d'une plantule il y a, les supposées BFCP colonisant sa rhizosphère - et précisément en raison de leur rhizocompétences, ponctionneront excessivement son flux photosynthétique est s'avéreront donc à terme contreproductives en termes agronomiques.

### Solution technique

Les semences *Poaceae* et/ou *Brassicacea* peuvent en principe véhiculer les cellules azotobactériennes placées à leurs surfaces dans le sol lors du développement des rhizosphères. En effet, du fait de leurs petites tailles, les semences fourragères, Poaceae et/ou Brassicaceae sont nombreuses et leurs répartition uniforme au semis à la surface des sols, et donc en proximité des BRR et/ou des résidus de culture pailleux laissée au sol une fois les pailles enlevées, permettra de véhiculer des cellules (azoto)bactériennes vers ses sources de substrats carbonés, et donc sans nécessairement coloniser les racines de plantes établit, colonisation source d'une importante ponction du flux photosynthétique.

En supposant qu'environs 20% des quelques 15 à 30 millions de semences apportées par hectare donnent lieu à un plantule définitivement établit ; les 80% qui ne le font pas pourront véhiculer des cellules biofertilisantes (azoto)bactériennes vers la surface du sol, et - par entraînement, vers les BRR lors du développement de leurs rhizosphères La présente invention permettra de mieux valoriser ces semences, avortées en un sens, entant que propagules pour la bactérisation des matières organiques résiduelles qui les avoisinent. Ce développement de *rhizosphères naissantes* et dont le développement est interrompu faute d'avoir pu contribuer effectivement à l'établissement d'une plantule établie permettra néanmoins la mise en place d'une certaine *surdensité rhizosphérique* (SDR) ; chaque plantule établie bénéficiant de la sorte - en sus d'une rhizosphère qui lui propre, d'un nombre - de 2 à 4 selon le cas, de rhizosphères que partiellement établies par ses consoeurs candidates moins fortunées. Cette SDR permettra d'autant plus l'entraînement vers les BRR les *Azotobacteraceae* initialement présentes sur les semences - candidates et élues, et cela sans pour autant ponctionner les flux photosynthétiques des plantules établies.

En effet, dans les deux cas de figures, la vocation des semences, et donc des rhizosphères qui en sont issues, n'est plus traditionnelle mais nouvelle. Il s'agit en sorte de « sacrifier » ces semences Cipan et/ou fourragères candidates à l'implantation d'une plantule définitive mais non-élue pour en faire des véhicules, des « vecteurs », pour les *Azotobacteraceae* phytogènes. Du coup, les BRR et autres résidusphères souterraines difficilement atteignables par inoculation peuvent maintenant être valorisées. Cette utilisation des semences comme véhicules pour la bactérisation de substrats carbonés au-delà de la rhizosphère est nouvelle.

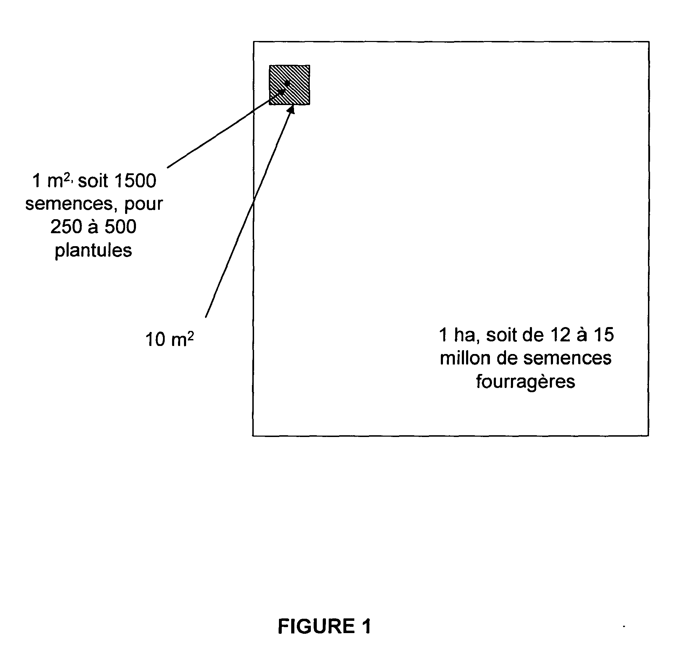

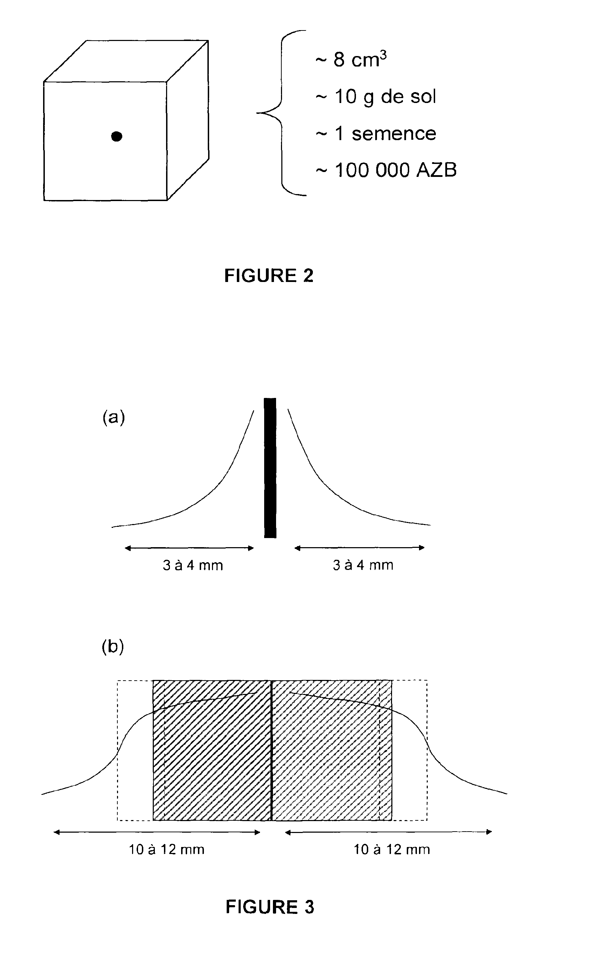

Conceptuellement et par exemple, des quelques 20-25 millions de semences fourragères par dose - hectare, 250 à 500 plantules par m² établies définitivement apparaitront, soit un taux d'implantation d'à peine 10 à 20% **(****Figure 1****).** C'est ce qu'indiquent effectivement les données de Evers et Nelson 2000 et Hall et al. 2004. En terme volumétriques, il y aura donc une semence, avec ou sans établissement des plantules, par 4 cm² sur environ 2 cm de profondeur (selon le type de pratique culturale utilisée pour le semis), soit une semence par 8 cm³ de volume de sol arable, soit environ 10 g de sol (Figure 2). Chaque dose-hectare d'inocula *AZB (Azotobacteraceae)* véhiculée par les 2,5x10⁷ semences comporte 5 x 10¹² *AZB (Azotobacteraceae),* soit environ 1 x10⁵ cellules par semence. Une semence disposée au centre de ce volume est donc à environ 2,2 à 2,3 cm de sa périphérie.

Or, selon les données disponibles pour les résidus pailleux incorporés au sol (Gaillard et al. 1999, 2003 ; Moritsuka et al. 2004), les métabolites carbonés issus de la dégradation de ces résidus de culture influence la microflore bactérienne située dans une périphérie d'au plus 0,8 cm de rayon, soit de 3 à 4 mm de part et d'autre desdits résidus pailleux. La granulométrie des biomasses racinaires résiduelles étant beaucoup plus fine ; elles sont du coup beaucoup mieux (plus) répandues au du volume de sol concerné. En d'autre mots, pour des résidus de culture pailleux initialement intègres, la zone d'influence des métabolites issues de leur dégradation est plus limitée, soit de l'ordre de 6 à 8 mm **(****Figure 3****-a),** au plus (Gaillard et al. 1999, 2003 ; Moritsuka et al. 2004) ; pour les biomasses racinaires cette zone est plus étendue, soit de l'ordre de 10, 12 voire 15 mm **(****Figure 3****-b)**. Cette répartition plus homogène - plus étendue, des BRR par rapport aux résidus de culture pailleux enfouis rend possible la vectorisation par entraînement des *Azotobacteraceae* ainsi capables d'intercepter plus facilement d'éventuels substrats carbonés.

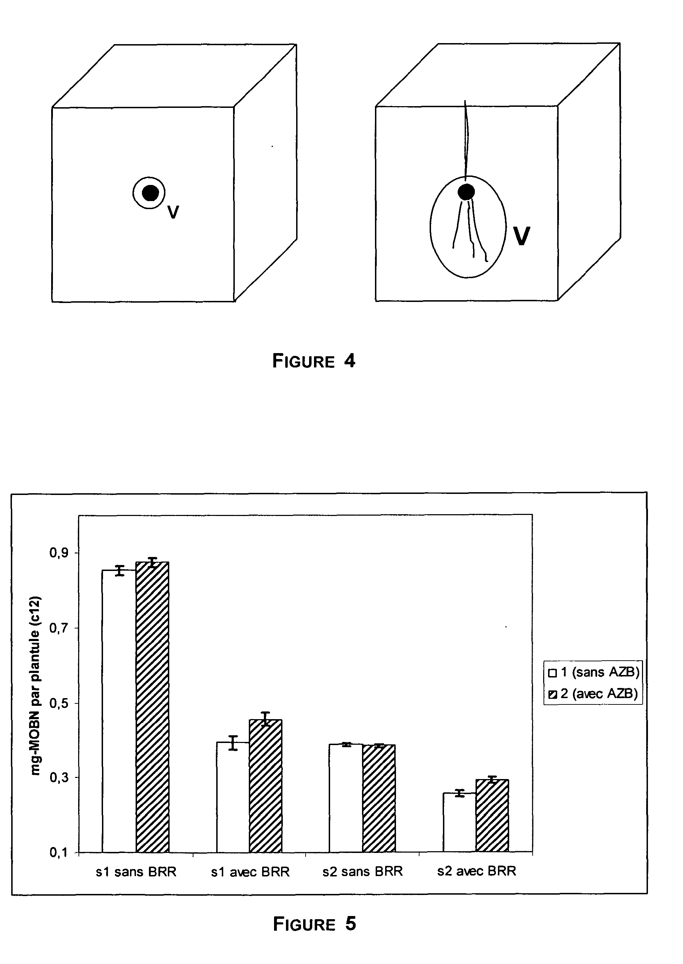

L'invention valorise donc la germination des semences candidates, qu'elles établissent éventuellement une plantule définitif ou non, le volume - v, de sol initialement occupé par cette propagule individuelle augmentera appréciablement - **V,** du fait d'une augmentation du diamètre de quelques mm initialement au moment du semis à quelques cm 2 à 4 jours post-semis (Figure **4****).** Ce volume, **V** maintenant partiellement occupé par des BFCP azotobactériennes entrera d'autant plus facilement en contacte avec - interceptera, les biomasses racinaires résiduelles que l'on cherche à valoriser comme substrat carboné pour ce type de biofertilisation. Les biomasses racinaires résiduelles lors de la germination des semences individuelles, qu'elles donnent lieu à une plantule définitive ou non, entraîneront dont un certains nombre de cellules azotobactériennes au-delà d'une certain volume de sol (v) vers un plus grand volume de sol (V). Cet entraînement de cellules BFCP par les radicelles est déjà établit pour des BFCP *Pseudomonodaceae* (Dandurand et al. 1997). Ce phénomène permettra d'entraîner la quasi-totalité des *Azotobacteraceae* apportées vers les biomasses racinaire résiduelles (BRR) et/ou résidus de culture préalablement enfouis. L'invention permet donc de valoriser les semences qui normalement contribuent peu ou pas à l'implantation de la prairie en les transformant en véhicules (vecteurs) de BFCP.

Cela dit, et afin d'éviter la contre productivité d'une colonisation rhizobactériennes de ces plantules établies, l'inoculum sera avantageusement constitué d'Azotobacteracea plutôt rhizo***in***compétentes capables - une fois entrainées vers les résidusphère racinaires souterraines, de les valoriser au sens de la présente invention sans pour autant s'incruster activement dans la rhizosphère et de ponctionner ainsi le flux photosynthétique. Cette utilisation de la rhizo*in*compétence - au sens entendu ici, pour l'inoculation de semences est ingénieuse et contraire aux habitudes de l'homme de métier qui cherche plutôt à maximiser la rhizocompétence de tels inocula.

L'invention consiste en un inoculum *bactérien* constitué de semences fourragères pour utilisation en présence de BRR (biomasses racinaires résiduelles) lors de l'implantation desdites cultures fourragères. Ces BRR sont nécessairement présentes en grandes quantités du fait d'une certaine récalcitrance de biomasses racinaires ; leurs accumulation peut à terme représenter aux alentours de 30 tonnes de matières sèches par hectare. C'est cette matière qui peut maintenant être inoculée - plus ou moins directement via l'entraînement de BFCP - avantageusement *Azotobacteraceae,* par les rhizosphères des semences candidates et élues au sens de la présente invention. Lesdites semences pèsent chacune en moyenne de 0,5 à 6 mg, plus particulièrement de 1,5 à 5 mg, et préférablement d'environs 2 mg ; elles sont apportées à des doses-hectare comprises entre 8 et 48 kg, plus particulièrement entre 15 et 40 kg, et avantageusement d'environs 30 kg. Les cultures fourragères sont choisies parmi un groupe constitué d'espèces *Poaceae (alias Gramniae), Fabaceae (alias Leguminoseae)* ou *Brassicaceae.* Cette inoculum est constitué de cellules bactériennes de la famille *Azotobacteraceae* ; les doses-hectare de celles-ci étant comprise entre 1 x 10¹¹ et 1 x 10¹⁴ cellules, plus particulièrement entre 1 x 10¹² et 1 x 10¹³ cellules, et avantageusement d'environ 5 x 10¹² cellules. De plus, les *cellules Azotobacteraceae* sont particulièrement rhizoincompétentes en ce sens qu'elles ne produisent pas d'effets positifs sur les plantules lorsqu'appliquées sur semences fourragères en absence de biomasses racinaires résiduelles (BRR) souterraines, et/ou que l'effet de ces cellules *Azotobacteraceae* sur les plantules obtenues en absence de biomasses racinaires résiduelles (BRR) souterraines n'est pas corrélé à celui observé en présence de BRR. A terme, ladite rhizo*in*compétence - ici *quasi* synonyme de résiducompétence, pourra aussi être évaluée de façon plus objective ; pour cela, il faudra encore mieux comprendre et apprécier les mécanismes biomoléculaires impliqués dans la rhizo(*in*)compétence. A suivre.

Il s'agit donc aussi d'un inoculum azotobactérien pour le traitement des BRR **caractérisée en ce que** les biomasses *Azotobacteraceae* sont particulièrement rhizoincompétentes mais néanmoins apportées au sol à l'aide d'une co-formulation solide composée pour l'essentielle de semences fourragères, lesdites semences fourragères agissant ainsi comme vecteurs (véhicules) pour ces BFCP vers les BRR souterraines normalement peu/pas accessibles à ce type d'inoculation.

### Avantages apportés, nouveauté et activité inventive

L'invention concerne donc bien un inoculum bactérien pour utilisation lors de l'implantation d'une culture fourragère. Cet inoculum est ici constitué essentiellement d'une co-formulation sous la forme d'une dose(-hectare) de semences, avantageusement fourragères. Un inoculum bactérien constitué de la sorte et ne servant pas au traitement de ces semences, mais plutôt à valorisation microbiologique de biomasses racinaires résiduelles (BRR), est nouveau. En effet, il s'agit ni d'un procédé pour le traitement par inoculation de semences **(**EP 0 097 459 A**),** ni d'une composition pour le traitement de telles semences **(**US 5 113 619 A**),** ni d'une méthode d'utilisation pour l'amélioration de la stabilité des rendements de grandes cultures via l'(azoto)bactérisation des résidus de culture pailleux au sol **(**FR 2 910 230 A**),** voire d'un quelconque produit pour promouvoir et/ou faciliter l'inoculation de semences **(**US 3 499 748 A**).**

J'ai tenté de démontrer avec la présente invention que ce type d'inoculum permet une certaine valorisation microbiologique des biomasses racinaires résiduelles (BRR) souterraines et donc normalement peu ou pas accessibles à ce type d'inoculation. Ce n'est donc pas les semences **(**EP 0 097 459 A**,** US 5 113 619 A et US 3 499 748 A**)** ou les résidus de culture pailleux au sol **(**FR 2 910 230 A**)** qui sont ici ciblés par ce type d'inoculation, mais bien lesdites BRR. Les semences fourragères ne sont ici en sorte qu'un *coformulant.* Cette coformulation est cependant particulièrement utile puisque la dynamique des rhizosphères qui émanent de ces semences - vecteurs d'inoculation, permet vraisemblablement d'entraîner les BFCP vers ce substrat carboné que sont maintenant les BRR.

L'invention permet de valoriser les biomasses racinaires résiduelles ET une majorité de semences individuelles Poaceae fourragères qui autrement ne servent essentiellement à rein si ce n'est que de remplisseur volumétrique pour les semences « élues ». Ces semences, dont la plupart germent néanmoins, sont maintenant valorisées comme vecteurs et porteurs de BFCP vers la biomasse racinaire résiduelle, qui elle aussi maintenant peut être valorisée, un peu à la façon des résidus de culture pailleux au sol, en tant que substrat carboné pour les Azotobacteraceae. *Idem* pour les Cipan fourragères implantées sur BRR et/ou résidus de culture pailleux, le rapport C/N de celles-ci - du fait d'un plus grand prélèvement d'azote, améliorant ainsi leur valeur fertilisantes.

L'invention permet une meilleur fertilisation azoté et implantation de la praire « nouvelle » sur les restes de la praire ancienne lors de sa rénovation et/ou de son amélioration. Normalement, les susdites BRR, très abondantes sous d'anciennes praires, ne fait que contribuer à l'immobilisation de l'azote par la flore bactérienne du sol ; l'arrière effet agronomique de cette immobilisation est conséquente. Enfin, l'invention est utile parce qu'elle réconcilie, dans le cas particulier de la rénovation de prairies anciennes, biofertilisation azotobactérienne des cultures non-légumineuses et traitement bactérien des semences ; normalement, ce type de bactérisation est contreproductif en raison d'une ponction du flux photosynthétique de la plante.

### BRÈVE DESCRIPTION DES DESSINS ET FIGURES

- ***Figure 1** :*: *Schématiquement et par exemple, des quelques 20-25 millions de semences fourragères par dose* - *hectare, quelques 250* à *500 plantules établis définitivement apparaitront, soit un taux d'implantation d'à peine 10 à 20%.*
- ***Figure 2** :*: *Schématiquement et par exemple, en terme volumétriques, il y aura une semence, avec ou sans établissement des plantules, par 4 cm² sur environ 2 cm de profondeur, soit une semence par 8 cm³ de volume de sol arable, soit environ 10 g de sol. Chaque dose-hectare d'inocula AZB (Azotobacteraceae) véhiculée par les 2, 5x 10⁷ semences comporte 5 x 10¹² AZB (Azotobacteraceae), soit environ 2 x 10⁵ cellules par semence. Une semence disposée au centre de* ce *volume est donc en moyenne à* 2 *cm de* sa *périphérie, et les métabolites carbonés issus de la dégradation de ces résidus de culture influence la microflore bactérienne située dans une périphérie d'au plus 0,8* cm *de rayon.*
- ***Figure 3** :*: *Schématiquement et par exemple, pour des résidus de culture pailleux initialement intègres, la zone d'influence des métabolites issues de leur dégradation est plus limitée, soit de l'ordre de 5 à 8 mm (**Fig. 3**-a) ; pour BRR cette zone est nettement plus étendue, soit de l'ordre de 10, 12 voire 15 mm (**Fig. 3**-b).*
- ***Figure 4** :*: *Le volume - v, de sol initialement occupé par une propagule individuelle (semence) augmentera appréciablement - V, du fait d'une augmentation du diamètre de quelques mm initialement au moment du semis à quelques cm 2 à 4 jours post-semis. Ce volume, V maintenant partiellement occupé par des BFCP azotobactériennes entrera d'autant plus facilement en contacte avec les biomasses racinaires résiduelles.*
- ***Figure 5** :*: Mobilisation de l'azote (MOBN) par la MSPA (matière sèche des parties aériennes) par plantules de *Lolium multiflorum* 56 jours post-semis (c12) sans (s1) et avec (s2) SDR (surdensité rhizosphérique), BRR et traitement (des semences) *Azotobacteraceae* (AZB). Faute d'effet significatif du traitement AZB, les barres d'écart-types sont incluses afin de démontrer - en présence de BRR, la vraisemblance de cet effet AZB par rapport aux témoinx appariés sans AZB.

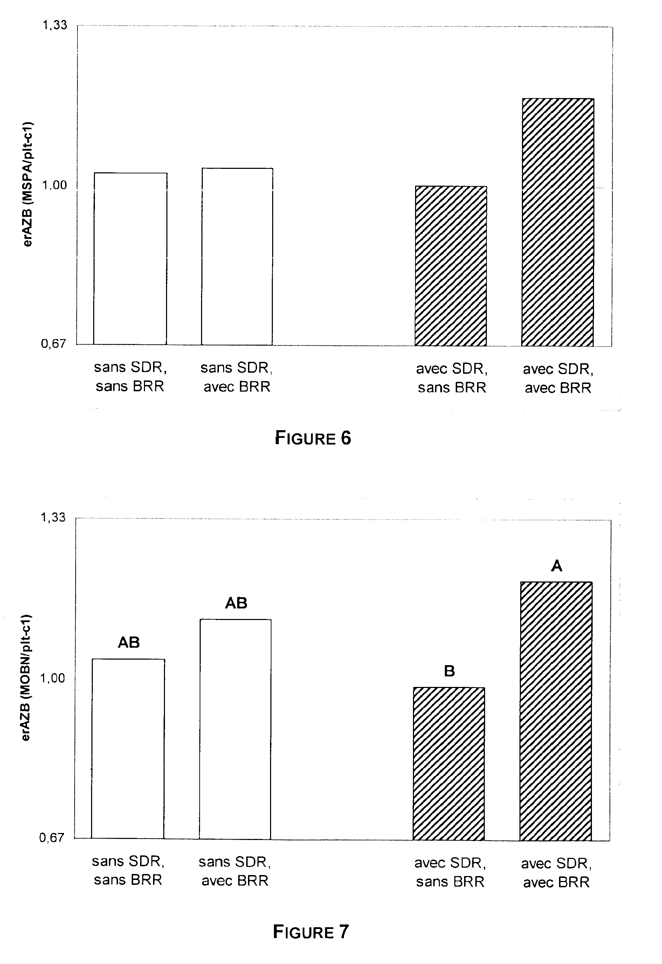

- **Figure 6** :: Efficacité relative des traitements *Azotobacteraceae* (er AZB) des semences *Lolium multiflorum* en termes de mg-MSPA (matière sèche des parties aériennes) par plantules (plt) récoltée 28 jours post-semis (c1) avec et sans SDR (surdensité rhizosphérique) et/ou BRR. Le cas échéant, les barres avec le même lettrage ne sont pas significativement différentes selon la méthode de comparaison multiple des moyennes dite « Duncan » (α = 5%).
- **Figure 7** :: Efficacité relative des traitements *Azotobacteraceae* (er AZB) des semences *Lolium multiflorum* en termes de mg-MSPA (matière sèche des parties aériennes) par plantules (plt) récoltée 28 et 56 jours post-semis (c1 + c2 = c12) avec et sans SDR (surdensité rhizosphérique) et/ou BRR. Le cas échéant, les barres avec le même lettrage ne sont pas significativement différentes selon la méthode de comparaison multiple des moyennes dite « Duncan » (α = 5%).

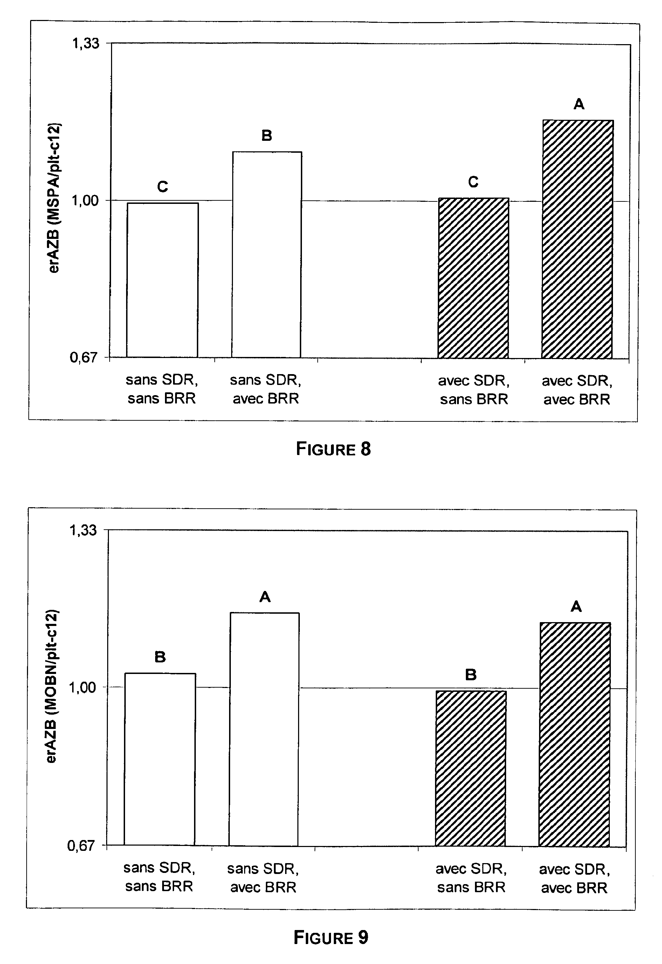

- **Figure 8 :**: Efficacité relative des traitements *Azotobacteraceae* (er AZB) des semences *Lolium multiflorum* en termes de mg-MOBN (matière sèche des parties aériennes x %N) par plantules (plt) récoltée 28 jours post-semis (c1) avec et sans SDR (surdensité rhizosphérique) et/ou BRR. Le cas échéant, les barres avec le même lettrage ne sont pas significativement différentes selon la méthode de comparaison multiple des moyennes dite « Duncan » (α = 5%).
- **Figure 9** :: Efficacité relative des traitements *Azotobacteraceae* (er AZB) des semences *Lolium multiflorum* en termes de mg-MOBN (matière sèche des parties aériennes x %N) par plantules (plt) récoltée 28 et 56 jours post-semis (c1 + c2 = c12) avec et sans SDR (surdensité rhizosphérique) et/ou BRR. Le cas échéant, les barres avec le même lettrage ne sont pas significativement différentes selon la méthode de comparaison multiple des moyennes dite « Duncan » (α = 5%).

### MODE DE REALISATION PREFERE DE L'INVENTION

### (i) obtention des souches et préparation des inocula :

Lesdites souches *Azotobacteraceae* d'origine telluriques sont avantageusement produites par fermentation à l'état solide directement au sein de la formulation solide si celle-ci le permet ; voir en ce sens FR 06/00014 et FR05/05753. Il est aussi possible de les produire en partie par fermentation à l'état liquide et de les introduire dans lesdites formulations solides par après fin d'en augmenter les biomasses. Les souches azotobactériennes sont obtenues en prenant soin de maintenir le rapport C/N des cultures mères et des milieux de cultures subséquents le plus haut possible, soit d'au moins 20 à 25. Si possible, i! est avantageux d'utiliser comme substrat carboné, outre ceux mentionnés dans les précédentes inventions, des biomasses racinaires de Poaceae, soit récoltés de sols arables, soit produites par cultures hydroponiques.

Les souches azotobactériennes ainsi obtenues peuvent être formulées et conditionnées selon les règles de l'art, y compris celui généralement mis en oeuvre pour la préparation d'inocula *Rhizobiaceae.* Il est donc loisible, voire avantageux, de procéder tel que décrit dans ma précédente invention - FR 06/00014, par voie de fermentation à l'état solide à même le substrat carboné et matriciel utilisée pour la formulation solide des inocula, i.e. des résidus pailleux, y compris du son de blé ou de céréale, ou encore un co-produit issue d'un procédé bio-industriel dont le rapport C/N n'est pas trop faible. Il est aussi possible d'utiliser une formulation solide à base de tourbe comme c'est actuellement le cas avec les inocula Rhizobiaceae, ou encore des charbon activés et/ou tout autre liant ou composés pouvant faciliter le pelliculage des semences.

### (ii) traitements azotobactériens des semences Poaceae :

Le poids de mille grains des semences est donc d'environ 1 à 6 mg, et la dose-hectare comprends avantageusement de 12 à 25 millions de semences individuelles permettant d'établir au minimum de 250 à 500 plantules définitifs par m². Ces semences seront enduites d'une préparation inoculante apportant l'équivalent d'environ de 2,5 x 10¹² cellules azotobactériennes *(Azotobacteraceae)* par hectare. Il est avantageux d'apporter cette préparation en formulation solide capable d'adhérer aux semences, i.e. de les pelliculer.

En principe, un volume de formulation de 250 à 400 g par dose-hectare, soit environs 10¹⁰ cellules azotobactériennes par gramme de préparation est avantageux, bien que d'autres proportions inoculum / semences sont possible selon les circonstances. Selon les règles de l'art, les semences et/ou la formulation, s'il s'agit d'une formulation solide sont légèrement mouillés afin d'assurer une adhésion de l'inoculum.

Pour fin expérimental et/ou de démonstration toute forme de production, de formulation et/ou de conditionnement d'inocula (azoto)bactériens sont permis, par exemple par fermentation à l'état solide et par simple mise en contacte des semences avec la préparation inoculant résultante. Ici, nous avons mise en contacte l'équivalent d'une dose-hectare de semences *Lolium multiflorum* avec l'équivalent d'une dose-hectare des cellules azotobactériennes produites selon le mode opératoire décrit en (i).

### (iii) mesure de la rhizoincompétence des traitements azotobactériens (AZB) :

La rhizo***in***compétence est difficilement et/ou objectivement mesurable - sauf par la négative et donc de façon plutôt qualitative (i.e. un traitement AZB peut être plus ou moins rhizocompétent, mais ne peu pas objectivement être du coup plus ou moins rhizo***in***compétent sans établir de facto un seuil arbitraire, ou encore mesurer directement la répulsion de cellules *Azotobacteraceae),* J'ai donc défini la rhizo***in***compétence pour un traitement (de semences) AZB selon (a) l'absence d'efficacité relative de ce traitement AZB (erAZB) par rapport à un blanc (témoin) non-traité, et/ou (b) l'absence de corrélation entre une éventuelle erAZB de tels traitements (de semences) AZB avec et sans la présence de BRR souterraines. Les résidusphères étant absentes, l'erAZB sans BRR est nécessairement que tributaire d'une certaine rhizocompétence éventuelle.

### APPLICATIONS BIOINDUSTRIELLES ET AGRONOMIQUES

Les cellules *Azotobacteraceae* utilisées sont obtenues du sol alsacien (Tableau A), et cela avantageusement via le protocole décrit dans FR 01/15542 ; elles sont par la suite appliquées au dites semences *Lolium multiflorum* à hauteur d'environ 100 000 cellules viables par semences, soit environ 5 x 10¹² *Azotobacteraceae* par hectare.

| TABLEAU A : Analyse physico-chimique du sol alsacien utilisé | |
|---|---|
| CEC (cmol) | 121 |
| pH | 6,7 |
| MO (%) | 1,84 |
| P2O5 (Dyer) | 0,190 |
| P2O5 (Joret-Hebert) | 0.069 |
| Texture A-L-S (g/kg-sol) | 218-673-84 |
| K2O (g/kg-sol) | 0,12 |
| MgO (g/kg-sol) | 0,16 |
| CaO (g/kg-sol) | 3,2 |
| Na20 (g/kg-sol) | 0,025 |
| Fe (mg/kg-sol) | 73,3 |
| Mn (mg/kg-sol) | 28,7 |
| Zn (mg/kg-sol) | 2,8 |
| Cu (mg/kg-sol) | 2,5 |
| B (mg/kg-sol) | 0,44 |

Dans des pots de 500 ml, 350g de sol reconstitué sont mélangé à hauteur de 6% un mélange d'un tiers de résidus de culture pailleux (eg. blé d'hiver) et de deux tiers de biomasses racinaires Poaceae. Ces biomasses sont préalablement séchées et broyées (2 mm). Afin de simuler un semis *in situ* pour fin de rénovation - voire d'amélioration, d'une prairie, et compte tenu de la superficie du pot (i.e. environ 200 cm², soit 2% d'un m²), une quarantaine de graines Poaceae (0,2 g de semences de *Lolium multiflorum* par exemple) sont déposées, tassées, irriguées et fertilisées (*Nb*. au plus 35 mg d'azote fertilisant 21 jours post semis cependant) selon les règles de l'art de façon à assurer, en principe, leur germination dans les 5 à 7 jours post-semis.

Afin d'installer une surdensité rhizosphérique (SDR) - capable en principe d'améliorer l'efficacité de l'invention en multipliant les mises en contacte entre les rhizosphères (naissantes) et les BRR, j'ai simplement modulé en pot les rapports plantules / racines (rhizosphères). Pour ce faire j'ai installé deux taux (types) de semis ; **s1** (sans SDR), soit en principe avec un ratio plantules /rhizosphères = 1,00, et **s2** (avec SDR), soit en principe avec un ratio plantules / rhizosphères de moins de1,00 permettant d'établir entre 2 et 4 rhizosphères naissantes par plantule établie.

Pour obtenir s1 (sans SDR) j'ai apporté 0,20 g de semences *Lolium multiflorum,* soit environ une quarantaine de propagules (semences) par pot. Pour obtenir s2 (avec SDR) j'ai apporté 1,00 g du même type de semences et placé un *disque perforé (i.e.* le fond découpé d'un pot à fleur de 750 ml) munis de 9 trous - dont 4 petits ; ce « filtre » permit la levée que d'une fraction de ces quelques 200 graines, soit environs 90 à 100 dans les faits, soit un d'implantation d'environ 40%. s2 comporte donc un peu moins de 100 plantules pour quelques 200 graines, soit en principe une SDR de l'ordre de 2,25 ; s1 lui comporte en principe autant de plantules que de graines semées, soit une SDR nulle, i.e. de l'ordre de 1,00.

A noter que la même dose-hectare d'Azotobacteraceae a été utilisée dans les deux cas, soit environs l'équivalent de 1 kg d'inocula obtenues par fermentation à l'état solide au sens entendu ci-haut, et apport donc avantageusement 5 x 10¹² cellules *Azotobacteraceae* à 10⁷ g de résidus de culture pailleux incorporés à 10⁹ g de sol par hectare. Des semences selon s1 et s2, avec et sans traitement Azotobacteraceae (AZB) ont été déposées sur ce sol reconstitué avec et sans biomasses racinaires résiduelles (BRR) et résidus de culture pailleux (2/3 BRR, 1/3 résidus de culture pailleux).

L'unité expérimentale de base est constituée de deux pots, avec et sans traitement AZB. Ces quatre modalités expérimentales unitaires avec et sans traitement AZB (i.e. s1 et 2 avec et sans BRR) sont disposées en carré latin, soit un total de 16 x 2 = 32 pots de 350 g de sol constitué de 1% de résidus (2/3 - 1/3 BRR - résidus pailleux, respectivement). L'efficacité relative des rhizosphères de *Lolium* ainsi azotobactérisés (er AZB) à entraîner les BFCP *Azotobacteraceae* vers leurs substrats carbonés que sont maintenant en principe les BRR et résidus pailleux enfouis sera calculé comme le rapport des la MSPA (matière sèche des parties aériennes) produite et/ou la mobilisation de l'azote (MOBN ; MSPA x % Nₜₒₜₐₗ) par celle-ci avec et sans traitement AZB.

J'ai appliqué dès le semis 50 ml de la solution nutritive (Tableau B) par pot sans N, et avantageusement après chaque coupe, c1, c2, etc., et surtout avec 35 mg-N / kg-sol dès c1. Il faut toujours irriguer les pots en apportant ces solutions par la bas via la soucoupe afin d'éviter à tout prix le lessivage vers le bas des *Azotobacteraceae* qui pourrait contribuer à brouiller le susdit effet d'entraînement des *Azotobacteraceae* par les rhizosphères.

| **TABLEAU B : Préparation des solutions nutritives** | |
|---|---|
| **Quatre solutions molaires (1 M) pour les apports de N/P/K/S/Mg ;** | |
| 1. Ca(NO₃)₂.4H₂O | 236.1 g/l |
| 2. KNO₃ | 101.1 g/l |
| 3. KH₂PO₄ | 136.1 g/l |
| 4. MgSO₄.7H₂O | 246.5 g/l |

| **Deux solutions oligo-élémentaire, soit pour 1 L ;** | |
|---|---|
| H₃BO₃ | 2.8 g |
| MnCl₂.4H₂O | 1.8 g |
| ZnSO₄.7H₂O | 0.2 g |
| CuSO₄.5H₂O | 0.1 g, et, le cas échéant, |
| NaMoO₄ | 0.025 g |
| FeSO₄.7H₂O | 0,0078 g |

| **Pour prépare 1 L de solution nutritive, dite de « Hoagland » ;** | |
|---|---|
| 7 ml Ca(NO₃)₂ | |
| 5 ml KNO₃ | |
| 2 ml KH₂PO₄ | |
| 2 ml MgSO₄ | |
| 1 ml oligo-éléments (avec ou sans Mo) | |

Les MSPA des plantules de *Lolium multiflorum* ainsi établies peuvent être récoltées 28 jours post-semis (jps ; c1) à l'aide de ciseaux, séchées, et pesées. MSPA et MOBN - en mg, sont déterminées pour chacune des coupes (récoltes), avantageusement à 28 jours d'intervalle. En effet, pour les espèces à fortes repousses comme le *Lolium* des coupes multiples (c1, c2 ... cn) peuvent être effectuées dès 28 jps ; généralement il est possible d'effectuer 2, voire 3 coupes. La MSPA peut être exprimée pour chaque coupe individuellement (c1, c2, c3, etc.) ou - plus avantageusement, pour leurs sommes (c1, c1+c2 = c12, c12+c3 = c123, etc.). J'ai donc réalisé deux coupes - c1 et c2, 28 et 56 jours post semis.

Il faut aussi déterminer le nombre de plantules (plt) établies par pot afin de pouvoir exprimer MSPA et MOBN sur une base unitaire - i.e. par plantule, MSPA/plt, MOBN/plt. *A priori,* en raison dudit disque perforé, le nombre de plantules établies avec s2 (avec SDR) aurait pu être le même que celui établies sur s1 (sans SDR), les susdits disques perforés ayant du en principe réprimer la levée et l'établissement d'environ 80% des quelques 250 semences. Or, dans les fait et en raison du jeu des plantules recouverts par les disques et donc capables de ce « faufiler » vers les orifices à proximités, ces disques ne purent empêcher la levée d'à peine 60% de ces plantules ; le ratio rhizosphères (naissantes) / plantules établie sur s2 (avec SDR) n'est au final que d'environ 2,25 au lieu de 5 (1,00 pour s1). Néanmoins, ce différentiel semble suffisant pour influencer la production de la MSPA - notamment (Figure 5), ainsi que l'efficacité relative des traitements (de semences) AZB (Figures 6, 7 et 8 ; voir infra).

A noter qu'il est aussi loisible d'utiliser ce dénombrement des plantules par pot comme covariable quantitative lors d'une éventuelle analyse de covariance (Ancova) ; l'Anova (analyses de variance) et l'Ancova des données MSPA et MOBN par plantule (plt) et par pot, respectivement, devraient cependant mener essentiellement aux mêmes conclusions, l'Anova étant généralement plus révélatrice, l'Ancova - elle, plus robuste. Au choix.

**Tableau 1 : Efficacités relatives des traitements AZB (erAZB) pour les premières coupes (c1 ; 28 jps), les deuxièmes coupes (c2 ; 26 jps) et leurs sommes (c12) en termes de MSPA et de MOBN par pot et par plantules (/plt). Les données sont organisées dans un premier temps en fonction de la présence (+) ou l'absence (-) de biomasses racinaires résiduelles (BRR), et dans un deuxième temps en fonction de l'établissement ou non (semis) d'un sursemis afin d'augmenter le nombre de rhizosphères candidates par rapport au nombre de plantules définitivement établies. La corrélation entre ces erAZB avec et sans BRR est aussi indiquée en guise de mesure indirecte de la rhizoincompétence des traitements AZB.**

| | | **er AZB c1** | | | | **er AZB c2** | | | | **er AZB c12** | | | |
|---|---|---|---|---|---|---|---|---|---|---|---|---|---|
| | | **MSPA c1** | **MOBN c1** | **MSPA/plt c1** | **MOBN/plt c1** | **MSPA c2** | **MOBN c2** | **MSPA/plt c2** | **MOBN/plt c2** | **MSPA c12** | **MOBN c12** | **MSPA/plt c12** | **MOBN/plt c12** |
| - BRR | Sans SDR | 0,900 | 0,914 | 0,924 | 0,938 | 0,962 | 1,004 | 0,987 | 1,031 | 0,946 | 0,993 | 0,971 | 1,019 |
| -BRR | Sans SDR | 1,017 | 1,033 | 1,065 | 1,082 | 0,973 | 1,017 | 1,020 | 1,065 | 0,984 | 1,018 | 1,031 | 1,067 |
| -BRR | Sans SDR | 1,129 | 1,146 | 1,182 | 1,201 | 0,924 | 0,965 | 0,968 | 1,011 | 0,980 | 0,989 | 1,027 | 1,036 |
| -BRR | Sans SDR | 0,886 | 0,900 | 0,928 | 0,943 | 0,912 | 0,952 | 0,955 | 0,997 | 0,905 | 0,945 | 0,948 | 0,990 |
| -BRR | Avec SDR | 1,075 | 1,059 | 1,065 | 1,049 | 1,042 | 1,029 | 1,033 | 1,020 | 1,055 | 1,035 | 1,045 | 1,026 |
| -BRR | Avec SDR | 0,918 | 0,904 | 1,020 | 1,004 | 0,900 | 0,889 | 1,000 | 0,988 | 0,905 | 0,891 | 1,006 | 0,990 |
| -BRR | Avec SDR | 0,929 | 0,915 | 0,953 | 0,939 | 0,966 | 0,954 | 0,991 | 0,978 | 0,951 | 0,945 | 0,975 | 0,970 |
| -BRR | Avec SDR | 0,900 | 0,886 | 0,962 | 0,947 | 0,947 | 0,935 | 1,012 | 0,999 | 0,930 | 0,926 | 0,995 | 0,990 |
| | **moyenne** | **0,969** | **0,969** | **1,012** | **1,013** | **0,953** | **0,968** | **0,996** | **1,011** | **0,957** | **0,968** | **1,000** | **1,011** |
| | | | | | | | | | | | | | |
| + BRR | Sans SDR | 0,864 | 0,934 | 0,932 | 1,008 | 1,170 | 1,218 | 1,262 | 1,315 | 1,119 | 1,193 | 1,208 | 1,287 |
| + BRR | Sans SDR | 0,885 | 0,957 | 1,004 | 1,086 | 0,974 | 1,015 | 1,106 | 1,152 | 0,958 | 1,009 | 1,087 | 1,145 |
| + BRR | Sans SDR | 1,091 | 1,180 | 1,122 | 1,214 | 1,067 | 1,111 | 1,097 | 1,143 | 1,070 | 1,116 | 1,101 | 1,148 |
| + BRR | Sans SDR | 1,136 | 1,230 | 1,088 | 1,177 | 1,041 | 1,084 | 0,996 | 1,038 | 1,055 | 1,096 | 1,010 | 1,049 |
| + BRR | Avec SDR | 1,250 | 1,272 | 1,406 | 1,430 | 1,000 | 0,965 | 1,125 | 1,085 | 1,055 | 0,997 | 1,187 | 1,121 |
| + BRR | Avec SDR | 0,852 | 0,867 | 1,099 | 1,118 | 1,000 | 0,965 | 1,290 | 1,244 | 0,960 | 0,952 | 1,238 | 1,227 |
| + BRR | Avec SDR | 1,163 | 1,183 | 1,242 | 1,263 | 1,051 | 1,014 | 1,123 | 1,083 | 1,083 | 1,038 | 1,157 | 1,109 |
| + BRR | Avec SDR | 1,029 | 1,046 | 0,981 | 0,998 | 1,212 | 1,169 | 1,157 | 1,116 | 1,149 | 1,147 | 1,096 | 1,095 |
| | **moyenne** | **1,034** | **1,084** | **1,109** | **1,162** | **1,064** | **1,068** | **1,144** | **1,147** | **1,056** | **1,068** | **1,136** | **1,148** |
| | | | | | | | | | | | | | |
| **Coefficient de corrélation +/- BRR** | | **0,333** | **0,349** | **0,295** | **0,301** | **-0,131** | **0,056** | **0,326** | **0,266** | **-0,031** | **0,072** | **0,260** | **0,220** |

Une première analyse des données MSPA et MOBN (en mg par pot et/ou par plant selon le cas) triées en fonction de la présence des BRR (Tableau 1) révéla qu'effectivement les erAZB avec et sans BRR sont (peu ou) pas corrélées, les erAZB avec BRR étant cependant appréciablement (les) plus importantes (voir infra). De plus, les erAZB sans BRR sont tous soit inferieures à 1,00 (MSPA et MOBN par pot) soit tout juste égale à 1,00 (MSPA et MOBN par plant) ; ces traitements (de semences) AZB sont donc au sens entendus rhizo***in***compétents.

J'ai rapporté au Tableau 2 les résultats des Anova des données MOBN/plt pour c1, c2 et c12. A noter que MOBN intègre le mieux d'éventuels effets plutôt phytogène (i.e. phytohormonaux) mais aussi tributaires d'une plus grande activité diazotrophique de la flore azotobactérienne, ici avantageusement stimulée par les traitements (de semences) AZB. En ce sens, à noter au Tableau 2 l'importance des BRR et de la SDR comme sources de variabilité de MOBN/plt, ainsi que la non-significativité des effets colonnes et lignes ; l'essai est donc en ce sens réussi. A noter aussi l'importance de l'interaction SDR x BRR, interaction sur laquelle je reviendrais.

**Tableau 2 : Analyse de variance (Anova) des valeurs de mobilisation de l'azote (MOBN) par plantules définitivement établie (/plt) lors de la première coupe (c1 ; 28 jps), la deuxième coupe (c2 ; 56 jps) et pour la sommes des MOBN ainsi calculées (c12).**

| Analyse de la variance (Variable MOBN/plt c1) : | | | | | |
|---|---|---|---|---|---|
| Source | DDL | Somme des carrés | Moyenne des carrés | F | Pr > F |
| Modèle | 30 | 0,029 | 0,001 | 47,587 | 0,114 |
| Erreur | 1 | 0,000 | 0,000 | | |
| Total corrigé | 31 | 0,029 | | | |
| **SDR** | **1** | **0,002** | **0,002** | **107,889** | **0,061** |
| **BRR** | **1** | **0,022** | **0,022** | **1099,730** | **0,019** |
| AZB | 1 | 0,000 | 0,000 | 4,215 | 0,289 |
| colonne | 3 | 0,001 | 0,000 | 8,375 | 0,248 |
| Ligne | 3 | 0,000 | 0,000 | 5,358 | 0,305 |
| SDR*BRR | 1 | 0,003 | 0,003 | 135,934 | 0,054 |
| SDR*AZB | 1 | 0,000 | 0,000 | 0,131 | 0,779 |
| BRR(AZB) | 1 | 0,000 | 0,000 | 1,837 | 0,405 |
| SDR*BRR*AZB | 1 | 0,000 | 0,000 | 1,273 | 0,462 |
| | | | | | |

| Analyse de la variance (Variable MOBN/plt c12) : | | | | | |
|---|---|---|---|---|---|
| Source | DDL | Somme des carrés | Moyenne des carrés | F | Pr > F |
| Modèle | 30 | 1,727 | 0,058 | 209,048 | 0,055 |
| Erreur | 1 | 0,000 | 0,000 | | |
| Total corrigé | 31 | 1,727 | | | |
| **SDR** | **1** | **0,790** | **0,790** | **2867,252** | **0,012** |
| **BRR** | **1** | **0,610** | **0,610** | **2215,295** | **0,014** |
| AZB | 1 | 0,007 | 0,007 | 24,964 | 0,126 |
| colonne | 3 | 0,007 | 0,002 | 8,576 | 0,245 |
| ligne | 3 | 0,026 | 0,009 | 31,020 | 0,131 |
| SDR*BRR | 1 | 0,215 | 0,215 | 779,479 | 0,023 |
| SDR*AZB | 1 | 0,001 | 0,001 | 4,612 | 0,277 |
| BRR(AZB) | 1 | 0,003 | 0,003 | 11,045 | 0,186 |
| SDR*BRR*AZB | 1 | 0,000 | 0,000 | 0,003 | 0,965 |

L'effet prononcé des BRR sur la production de MSPA est illustrée à la Figure 5 ; à noter cependant que la MSPA ainsi produite est vraisemblablement plus importante avec SDR. De plus, en présence de BRR, la MSPA par pot - bien que dans l'ensemble plus faible, semble néanmoins augmenter en réponse aux traitements (de semences) AZB (Figure 5).

J'ai voulu aussi préciser ces tendances en effectuant la comparaison multiple (Duncan, α = 5%) des MOBN par plantule (mg-MOBN/plt-c12) 56 jours post semis (c12 ; Tableau 3). Une certaine supériorité des traitements AZB en présence de BRR - non-significative pondéralement à ce stade, est effectivement vraisemblable. A noter qu'ici - et contrairement au MOBN/pot, les valeurs MOBN sont plus faibles avec sur semis en raison de plantules plus nombreux - soit environs 2,5 fois plus nombreux, et donc appréciablement et nécessairement plus petits.

**Tableau 3 : Mobilisation de l'azote (MOBN ; mg-N) par plantule (/plt) de Lolium multiflorum) 56 jours post semis (jps) selon les différentes modalités avec et sans SDR et/ou la présence ou non de BRR, voire d'un traitement AZB des semences au sens de la présente invention. Les valeurs moyennes de MOBN associées au même lettrage ne sont pas sensiblement différentes selon le méthode de comparaisons multiples des moyennes dites de « Duncan ».**

| Modalité | mg-MOBN/plt-c12 | Groupes homogènes selon Duncan (α = 5%) | | | |
|---|---|---|---|---|---|
| Sans SDR, sans BRR, AZB-non | 0,853 | A | | | |
| Sans SDR, sans BRR, AZB-oui | 0,876 | A | | | |
| Sans SDR, avec BRR, AZB-non | 0,394 | | B | | |
| Sans SDR, avec BRR, AZB-oui | 0,455 | | B | | |
| Avec SDR, sans BRR, AZB-non | 0,388 | | B | C | |
| Avec SDR, sans BRR, AZB-oui | 0,385 | | B | C | |
| Avec SDR, avec BRR, AZB-non | 0,256 | | | | D |
| Avec SDR, avec BRR, AZB-oui | 0,292 | | | C | D |

À la lumière de ces observations préliminaires à la Figure 5 et au Tableau 3, j'ai anticipé que l'efficacité relative des traitements (de semences) AZB par rapport à leurs témoins appariés non-inoculés (erAZB) ne seront positives qu'en présence de BRR. De plus, cette plus grande erAZB ne semble pas devoir nécessairement avoir la même allure avec est sans SDR ; elle devrait en principe profiter un peu de la surabondance de rhizosphères naissantes (i.e. avec SDR) néanmoins capables d'entraîner des *Azotobacteraceae* vers les BRR capables ainsi de les valoriser comme substrats. J'ai donc mené une deuxième série d'analyses de variance (Anova), mais cette fois de l'efficacité relative des *Azotobacteraceae* (er *AZB)* en termes MSPA et de MOBN par plantules établies et dénombrées 28 et 56 jours post-semis.

J'ai rapporté au Tableau 4 - à guise d'illustration, les résultats de ces Anovas pour les valeurs erAZB en termes de MOBN/plt. Ces Anova révèlent qu'en termes de MOBN/plt 28 et 56 jours post-semis seule BRR semble avoir a priori un effet significatifs sur erAZB ; en termes de MSPA/plt 28 et 56 les Anovas sont un peut plus à la faveur d'un éventuel interaction BRR x SDR (données non-rapportées ici).

A la lumière de ces Anovas, j'ai effectué une deuxième comparaison multiple, cette fois-ci des erAZB en termes de MOBN et de MSPA par plantules 28 (c1 ; Tableau 5) et 56 (c12 ; Tableau 6) jours post-semis.

**Tableau 4: Analyse de variance (Anova) des données pour l'efficacité relative des traitements (de semences) AZB en termes de mobilisation de l'azote (MOBN) par plantules de Lolium multiflorum établie (/plt) 28 jours post semis au moment de la première coupe (c1) et 56 jours post semis au moment de la deuxième coupe (c2 ; c12 = c1+c2) tenant compte d'un éventuel SDR et/ou de la présence de BRR (biomasses racinaires résiduelles) souterraines. A noter la contribution de ces BRR à la variances observée.**

| Analyse de la variance (erAZB selon MOBN/plt c1) : | | | | | |
|---|---|---|---|---|---|
| Source | DDL | Somme des carrés | Moyenne des carrés | F | Pr > F |
| Modèle | 9 | 0,179 | 0,020 | 1,039 | 0,500 |
| Erreur | 6 | 0,115 | 0,019 | | |
| Total corrigé | 15 | 0,294 | | | |
| SDR | 1 | 0,001 | 0,001 | 0,033 | 0,862 |
| BRR | 1 | 0,089 | 0,089 | 4,647 | 0,075 |
| colonne | 3 | 0,040 | 0,013 | 0,702 | 0,585 |
| ligne | 3 | 0,030 | 0,010 | 0,529 | 0,679 |
| SDR*BRR | 1 | 0,019 | 0,019 | 0,977 | 0,361 |
| | | | | | |

| Analyse de la variance (er AZB selon MOBN/plt c12) : | | | | | |
|---|---|---|---|---|---|
| Source | DDL | Somme des carrés | Moyenne des carrés | F | Pr > F |
| Modèle | 9 | 0,113 | 0,013 | 7,968 | 0,010 |
| Erreur | 6 | 0,009 | 0,002 | | |
| Total corrigé | 15 | 0,122 | | | |
| SDR | 1 | 0,003 | 0,003 | 1,837 | 0,224 |
| BRR | 1 | 0,075 | 0,075 | 47,522 | 0,000 |
| colonne | 3 | 0,018 | 0,006 | 3,773 | 0,078 |
| ligne | 3 | 0,017 | 0,006 | 3,629 | 0,084 |
| SDR*BRR | 1 | 0,000 | 0,000 | 0,142 | 0,720 |

**Tableau 5 : Efficacité relative des traitements AZB (erAZB) en termes de MSPA et de MOBN par plant au moment de la première coupe (c1) 28 jours post semis selon l'établissement d'un SDR et/ou la présence de BRR (biomasses racinaires résiduelles). Les valeurs moyennes selon ces modalités associées au même lettrage ne sont pas significativement différentes selon la méthodes des comparaisons multiples dite « Duncan » (α = 5%).**

| Modalité | (MSPA/plt c1) | Groupes homogènes selon Duncan (α = 5%) | |
|---|---|---|---|
| SDR-non*BRR-non | 1,025 | A | |
| SDR-non*BRR-oui | 1,037 | A | |
| SDR-oui*BRR-non | 1,000 | A | |
| SDR-oui*BRR-oui | 1,182 | A | |
| | | | |

| Modalité | (MOBN/plt c1) | Groupes homogènes selon Duncan (α = 5%) | |
|---|---|---|---|
| SDR-non*BRR-non | 1,041 | A | B |
| SDR-non*BRR-oui | 1,121 | A | B |
| SDR-oui*BRR-non | 0,985 | | B |
| SDR-oui*BRR-oui | 1,202 | A | |

**Tableau 6 : Efficacité relative des traitements AZB (erAZB) en termes de MSPA et de MOBN par plant récolté 28 et 56 jours post semis (c12) selon l'établissement d'un SDR et/ou la présence de BRR (biomasses racinaires résiduelles). Les valeurs moyennes selon ces modalités associées au même lettrage ne sont pas significativement différentes selon la méthodes des comparaisons multiples dite « Duncan » (α = 5%).**

| Modalité | (MSPA/plt c12) | Groupes homogènes selon Duncan (5%) | | |
|---|---|---|---|---|
| SDR-non*BRR-non | 0,994 | | | C |
| SDR-non*BRR-oui | 1,101 | | B | |
| SDR-oui*BRR-non | 1,005 | | | C |
| SDR-oui*BRR-oui | 1,170 | A | | |
| | | | | |

| Modalité | (MOBN/plt c12) | Groupes homogènes selon Duncan (5%) | | |
|---|---|---|---|---|
| SDR-non*BRR-non | 1,028 | | B | |
| SDR-non*BRR-oui | 1,157 | A | | |
| SDR-oui*BRR-non | 0,994 | | B | |
| SDR-oui*BRR-oui | 1,138 | A | | |

Afin de mieux illustrer cette valorisation des BRR par les Azotobacteraceae (AZB), permettant du coup d'en augmenter l'efficacité relative, nous avons rapporté graphiquement aux Figures 6 et 7, l'efficacité relative des AZB (*Azotobacteraceae*) présentes sur les semences au semis en terme de g MSPA produite par pot, et selon le type de semis (s1 ou s2) et/ou la présence des BRR (avec ou sans). A noter que seule la présence des BRR, pourtant pas directement mises en contacte avec les *Azotobacteraceae,* permet à celles-ci d'afficher une efficacité relative appréciablement positive. Aux Figures 8 et 9 est rapportée cette même l'efficacité relative des *Azotobacteraceae* (erAZB) mais en terme de mg-N prélevés par la MSPA par plant ; a noter encore une fois que seule la présence des BRR, pourtant a *priori* pas directement mise en contacte avec les *Azotobacteraceae,* permet à celles-ci d'afficher une efficacité relative positive.

Pour conclure, l'efficacité relative d*'Azotobacteraceae)* attribuable au traitement des semences Poaceae avec celles-ci est nettement supérieure en présence de BRR ; à vrai dire elle n'est significative et/ou positive qu'en présence de BRR. Pourtant, ces *Azotobacteraceae* n'ont par été appliquées aux BRR, mais bel et bien aux semences ; ce sont nécessairement les rhizosphères qui, au sens de la présente invention ont entraînées lesdites *Azotobacteraceae* vers les BRR, valorisant du coup celles-ci comme substrats carbonés pour la diazotrophie azotobactérienne. Ce constat est appuyé par le fait que cette plus grande efficacité relative d'AZB est particulièrement appréciable en terme de prélèvement d'azote par la MSPA. Le taux d'implantation simulé par s2 (avec SDR) est d'environs 40 à 50%, soit de 80 à 90 plantules par pot pour quelques 250 semences (données obtenues par comptage, mais pas rapportées ici). Par comparaison ce taux d'implantation est d'environs 100% avec s1 (sans SDR), soit une quarantaine de plantules établies pour autant de semences. Or, en pot du moins, cette différence entre s1 et s2 en terme de taux d'implantation, et donc du nombre de rhizosphères par plantules établis (*Nb*. Toutes les semences germent et donneront lieu à une rhizosphère, plus ou moins développée selon l'implantation ou non du plantule.), ne semble pas affecter sensiblement erAZB ; d'une façon ou d'une autre, la valorisation des BRR par l'entraînement rhizosphérique des Azotobacteraceae à lieu.

L'invention est donc susceptible d'être appliquée pour la valorisation des semences fourragères et cela indépendamment du susdit taux d'implantation, plutôt faible dans le cas de prairies et plutôt élevé dans le cas de Cipan fourragère, par exemple. D'une façon ou d'une autre il est ici possible de valoriser les BRR comme substrats carbonés pour les *Azotobacteraceae* ainsi apportées aux semences, valorisation qui serait difficile, voire impossible autrement. Nous considérons néanmoins maintenant acquise que la démonstration que cet entraînement rhizosphérique des *Azotobacteraceae* vers les BRR est susceptible d'être appliqué en agriculture.

### Références, bibliographie et brevets pertinents

Allison, Victoria J., R. Michael Miller, Julie D. Jastrow, Roser Matamala, et Donald R. Zak. 2005. Changes in Soil Microbial Community Structure in a tallgrass Prairie Chronosequence. Soil Sci. Soc. Am. J. 69:1412-1421
Boddey,R.M. et R. L. Victoria. 1986. Estimation of Biological Nitrogen Fixation Associated With Brachiaria and Paspalum Grasses Using Labelled Organic Matter and Fertilizer. Plant and Soil 90, 265-292
Bashan, Y. 1999. Interactions of Azospirillum in Soils: a Review. Biol Fertil Soils 29:246 -256
Claude, P-P. et L. Fillion. 2004. Effet de l'apport d'un inoculum bactérien aux résidus de culture de maïs-grain au sol sur le rendement et la qualité de blés d'hiver panifiables en France. Agrosolutions15(1) :23-29.
Claude, P-P. et M. Giroux. 2006. Effet des engrais organo - minéraux inoculés (EOMI) sur la croissance des plants de maïs - grain, les rendements, les prélèvements des éléments nutritifs et la qualité des grains. Agrosolutions 17(1): 51-64.
Dandurand, L.M., D. J. Schotzko, et G. R. Knudsen. 1997. Spatial Patterns of Rhizoplane Populations of Pseudomonas Fluorescens Appl. Environ. Microbiol., Aug. 1997, P. 3211-3217 Vol. 63, No. 8
Ehrenreich , John H.. 1954. Effects of Certain Fungicides on Seed Germination and Seedling Establishment of Range forage Plants. Thesis Presented to The Department of Grazing and Range Management, Colorado Agricultural and Mechanical Arts College, fort Collins, Colorado, Master of Science, 1954.
Evers, Gerald W. et Lloyd R. Nelson. 2000. Grazing Termination Date Influence on Annual Ryegrass Seed Production and Reseeding in the Southeastem Usa. Crop Sci. 40:1724-1728.
Gaillard, V., C. Chenu, S. Recous 2003. Carbon Mineralisation in Soil Adjacent to Plant Residues of Contrasting Biochemical Quality. Soil Biology & Biochemistry 35 (2003) 93-99
Gaillard, V., C. Chenu, S. Recous et G. Richard. 1999. Carbon, Nitrogen and Microbial Gradients Induces by Plant Residues Decomposing in Soil. Eur. J. Soil. Sci. 50:567-578.
Hall, M.H., C. J. Nelson, J. H. Coutts, et R. C. Stout. 2004. Effect of Seeding Rate on Alfalfa Stand Longevity. Agron. J. 96:717-722
Hegazi, N. A., H. M. Khawas, R. S. Farag et M. Monib. 1986. Effect of Incorporation of Crop Residues on Development of Diazotrophs and Patterns of Acetylene-Reducing Activity in Nile Valley Soils. Plant Soil 90 : 383-389.
Holguin , Gina et Yoav Bashan. 1996. Nitrogen-Fixation by Azospirillum Brasilense Cd Is Promoted When Co-Cultured With a Mangrove Rhizosphere Bacterium (Staphylococcus Sp.). Soil Biol. Biochem. 28 : 1651-1660.
Jaeger, C. H., S. E. Lindow, W. Miller, E. Clark, et M. K. Firestone. Mapping of Sugar and Amino Acid Availability in Soil Around Roots With Bacterial Sensors of Sucrose and Tryptophan. Appl. Environ. Microbiol., June 1999, P. 2685-2690 Vol. 65, No. 6
Kitchen, Stanley G. et Stephen B. Monsen. 1994. Germination Rate and Emergence Success in Bluebunch Wheatgrass. J. Range Manage. 47:145-150, March 1994
Larsen, Søren U. et Christian andreasen. 2004. Light and Heavy Turfgrass Seeds Differ in Germination Percentage and Mean Germination Thermal Time. Crop Sci. 44:1710-1720 (2004).
Margaret M. Roper et J. K. Ladose-hectare. Biological N2 Fixation by Heterotrophic and Phototrophic Bacteria in Association with Straw. Plant and Soil 174:211-224, 1995.
Matulova, M., R. Nouaille, P. Capek, E. forano, and A.-M. Delort. 2005. Degradation of Wheat Straw by Fibrobactersuccinogenes S85: a Liquid and Solid-State Nuclear Magnetic Resonance Study. Appl. Environ. Microbiol.71 : 1247-1253
Moritsukaa, Naoki, Junta Yanaic, Keiko Morib, Takashi Kosakic 2004. Biotic and Abiotic Processes of Nitrogen Immobilization in The Soil-Residue Interface Soil Biology & Biochemistry 36 (2004) 1141-1148
McMahon, Shawna K., Mark A. Williams, Peter J. Bottomley and David D. Myrold. 2005. Dynamics of Microbial Communities During Decomposition of Carbon-13 Labeled Ryegrass Fractions in Soil. Soil Sci. Soc. Am. J. 69: 1238-1247.
Nielsen, Tommy H., Ole Nybroe, Birgit Koch, Michael Hansen and Jan Sørensen. 2005. Genes Involved in Cyclic Lipopeptide Production Are Important for Seed and Straw Colonization by Pseudomonas Sp. Strain Dss73. Appl. Environ. Microbiol., July 2005, P. 4112-4116 Vol. 71, No. 7
Rasse, Daniel P., Cornelia Rumpel & Marie-France Dignac. 2005 Is Soil Carbon Mostly Root Carbon? Mechanisms for a Specific Stabilisation. Plant and Soil 269: 341-356
Roper, M.M., R. R. Gault et N. A. Smith. Contribution to The N-Status of Soil by Free-Living N2-Fixing Bacteria in a Lucerne Stand. Soil Biol. Biochem. 27 (4-5) : 467-471
Halsall, Dorothy M. et Alan H. Gibson. 1986. Nitrogenase Activity of a Range of Diazotrophic Bacteria on Straw, Straw Breakdown Products and Related Compounds. Soil Biol. Biochem. 21 : 291-298
Ries, R.E. et L. Hofmann. 1991. Research Observations: Standardized Terminology for Structures Resulting in Emergence and Crown Placement of 3 Perennial Grasses. J. Range Management 44(4) Schneider, Manuel K., Andreas Lüscher, Emmanuel Frossard et Josef Nösberger. 2006. An overlooked carbon source for grassland soils: loss of structural carbon from stubble in response to elevated pCO2 and nitrogen supply. New Phytologist 172 : 117-126
Seldin, L., Alexandre Soares Rosado, David William Cruz, Alberto Nobrega, Jan Dirk Van Elsas et Edilson Paiva. 1998. Comparison of Paenibacillus Azotofixans Strains Isolated From Rhizoplane, Rhizosphere, and Non-Root-Associated Soil from Maize Planted in Two Different Brazilian Soils. Appl. Environ. Microbiol 64(10) : 3860-3868.
Stanley G. Kitchen et Stephen B. Monsen. 1994. Germination Rate and Emergence Success in Bluebunch Wheatgrass. J. Range Management 47:145-150.
Von K. Winkel, Bruce A. Roundy et Jerry R. Cox. 1991. Influence of Seedbed Microsite Characteristics on Grass Seedling Emergence. J. Range Management 44(3)
Von K. Winkel et Bruce A. Roundy. 1991. A Technique to Determine Seed Preparation Treatments. J. Range Management 44(1)
Wang W, Guo J et Oikawa T 2007 Contribution of Root to Soil Respiration and Carbon Balance in Disturbed and Undisturbed Grassland Communities Northeast China; J. Biosci. 32 375-384

## Revendications

1. Inoculum bactérien constitué de semences fourragères pour utilisation en présence de BRR (biomasses racinaires résiduelles) lors de l'implantation desdites cultures fourragères.

2. Inoculum bactérien selon la revendication 1 **caractérisé en ce que** lesdites semences pèsent chacune en moyenne de 0,5 à 6 mg, plus particulièrement de 1,5 à 5 mg, et préférablement d'environs 2 mg.

3. Inoculum bactérien selon une quelconque des revendications précédentes **caractérisé en ce que** lesdites semences sont apportées à des doses-hectare comprises entre 8 et 48 kg, plus particulièrement entre 15 et 40 kg, et avantageusement d'environs 30 kg.

4. Inoculum bactérien selon une quelconques des revendications précédentes **caractérisé en ce que** les cultures fourragères sont choisies parmi un groupe constitué d'espèces *Poaceae (alias Gramniae), Fabaceae (alias Leguminoseae)* ou *Brassicaceae,*

5. Inoculum bactérien selon une quelconque des revendications précédentes **caractérisé en ce qu'**il est constitué de cellules bactériennes de la famille *Azotobacteraceae.*

6. Inoculum bactérien selon une quelconque des revendications précédentes **caractérisé en ce que** la dose-hectare de cellules bactériennes viables est comprise entre 1 x 10¹¹ et 1 x 10¹⁴ cellules, plus particulièrement entre 1 x 10¹² et 1 x 10¹³ cellules, et avantageusement d'environ 5 x 10¹² cellules.

7. Inoculum bactérien selon une quelconque des revendications précédentes **caractérisé en ce** les cellules *Azotobacteraceae* sont particulièrement *rhizoincompétentes.*

8. Inoculum bactérien selon la revendication précédente **caractérisé en ce** les cellules *Azotobacteraceae* ne produisent pas d'effets positifs sur les plantules lorsqu'appliquées sur semences fourragères en absence de biomasses racinaires résiduelles (BRR) souterraines.

9. Inoculum bactérien selon les deux revendications précédentes **caractérisé en ce** l'effet des cellules *Azotobacteraceae* sur les plantules obtenues en absence de biomasses racinaires résiduelles (BRR) souterraines n'est pas corrélé à celui observé en présence de BRR.

10. Utilisation d'un inoculum azotobactérien pour le traitement des biomasses résiduelles racinaires (BRR) **caractérisée en ce que** les biomasses *Azotobacteraceae* sont particulièrement rhizo*in*compétentes mais néanmoins apportées au sol à l'aide d'une co-formulation solide composée pour l'essentielle de semences fourragères selon un quelconque des revendications précédentes, lesdites semences fourragères agissant ainsi comme vecteurs (véhicules) pour ces BFCP vers les BRR souterraines normalement peu/pas accessibles à ce type d'inoculation.
